# EUROPEAN PATENT APPLICATION

(11) **EP 3 769 999 A1**
(43) Date of publication of application: **27.01.2021**
(21) Application number: 20181379.7
(22) Date of filing: 22.06.2020
(51) Int. Cl.: B60L 3/00, B60K 6/28, B60L 50/40, B60L 58/25, B60L 58/27, F02N 1/00, H02J 7/34

(54) **CHARGING AND DISCHARGING CONTROL DEVICE**

(30) Priority: 24.07.2019 JP 2019136347; 18.03.2020 JP 2020048379
(71) Applicant: YAZAKI CORPORATION, Minato-ku, Tokyo 108-8333 (JP)
(72) Inventor: Wataru, Kazuhisa, Shizuoka, 421-0407 (JP); Iwasaki, Katsuyuki, Shizuoka, 421-0407 (JP)
(74) Representative: Hoffmann Eitle

(57) **Abstract**

A charging and discharging control device of an electric double-layer capacitor, the charging and discharging control device includes a charging circuit receiving power supply from an external power supply and charging the electric double-layer capacitor, a discharging circuit discharging the electric double-layer capacitor, and a control circuit controlling the charging circuit and the discharging circuit to alternately repeat the charge and the discharge of the electric double-layer capacitor when temperature of the electric double-layer capacitor is equal to or lower than a predetermined value.

## Description

### BACKGROUND OF THE INVENTION

### <Field of the Invention>

The present invention relates to a charging and discharging control device for an electric double-layer capacitor.

### <Description of Related Art>

Patent Literature 1 (JP-A-2015-231269) has proposed an electric double-layer capacitor (EDLC) with a large capacitance is mounted on an automobile depending on requests for miniaturization, endurance improvement, life, and instantaneous load current supply of an automobile battery. The EDLC is used for a backup power supply, or is used for a drive source of an electric motor and a cell motor, and recovery of regenerative energy, similarly to a normal battery.

Since only one EDLC cannot meet a large capacitance required by an automobile, a plurality of EDLCs are connected in parallel or in series to achieve a large capacitance.

[Patent Literature 1] JP-A-2015-231269

However, the capacitance of the EDLC at a low temperature may decrease as compared with a capacitance thereof at a normal temperature. For example, a capacitance of an EDLC is reduced by 30% in a low-temperature environment of -40°C, compared with a capacitance in a room-temperature environment of 25°C. Only seven EDLCs are required at normal temperature, but 10 EDLCs are necessary in consideration of a low temperature environment, resulting in a cost increase and a size increase.

### SUMMARY

One or more embodiments provide a charging and discharging control device that achieves cost down and size down of an electric double-layer capacitor.

In an aspect (1), a charging and discharging control device of an electric double-layer capacitor is provided. The charging and discharging control device includes a charging circuit receiving power supply from an external power supply and charging the electric double-layer capacitor, a discharging circuit discharging the electric double-layer capacitor, and a control circuit controlling the charging circuit and the discharging circuit to alternately repeat the charge and the discharge of the electric double-layer capacitor when temperature of the electric double-layer capacitor is equal to or lower than a predetermined value.

In an aspect (2), the discharging circuit may include a discharging resistor connected to the electric double-layer capacitor. The discharging resistor may be disposed in a vicinity of the electric double-layer capacitor.

In the aspect (1), when an ambient temperature of the electric double-layer capacitor is equal to or lower than a predetermined value, a charging circuit and a discharging circuit are controlled to alternately repeat to charge and discharge the electric double-layer capacitor. As a result, the electric double-layer capacitor is caused to self-generate heat at a low temperature that is equal to or lower than a predetermined value, so that temperature of the electric double-layer capacitor can be raised. Therefore, a decrease in the capacitance of the electric double-layer capacitor at a low temperature can be prevented, and it is not necessary to increase the number of the electric double-layer capacitors, so that cost down and size down can be achieved.

In the aspect (2), a discharging resistor is provided in a vicinity of the electric double-layer capacitor. As a result, the electric double-layer capacitor can be heated by the heat generated by the discharging resistor, and the decrease in the capacitance of the electric double-layer capacitor at the low temperature can be further prevented.

According to one or more embodiments, it is possible to provide a charging and discharging control device that achieves cost down and size down of an electric double-layer capacitor.

The present invention has been briefly described above. Details of the present invention are further clarified by reading a mode for carrying out the present invention described below.

### BRIEF DESCRIPTION OF THE DRAWINGS

Fig. 1 is a circuit diagram showing a power supply system into which a charging and discharging control device in a first embodiment is incorporated.
Fig. 2 is a circuit diagram showing a power supply system into which a charging and discharging control device in a second embodiment is incorporated.

### DETAILED DESCRIPTION

Specific embodiments will be described below with reference to the drawings.

### (First Embodiment)

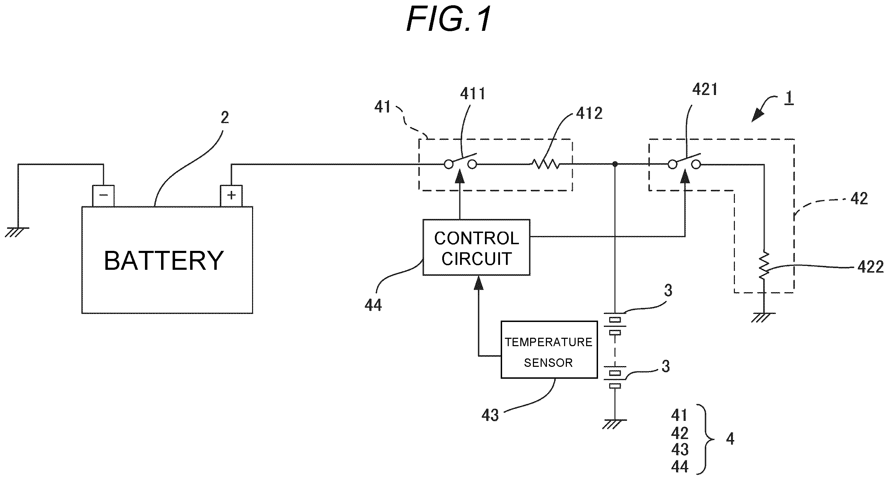

A power supply system 1 of a first embodiment is mounted on an automobile. As shown in Fig. 1, the power supply system 1 includes an in-vehicle battery 2 as an external power supply, an electric double-layer capacitor (EDLC) 3, and a charging and discharging control device 4 that controls charging and discharging of the EDLC 3. The in-vehicle battery 2 includes a secondary battery charged by an alternator (not shown) or the like.

A plurality of EDLCs 3 are connected in series to obtain a large capacitance. The EDLC 3 is mounted on a vehicle for applications such as a backup power supply for the in-vehicle battery 2, an energy supply during start of an engine of an idling stop system, energy regeneration during braking of brake, and power assist.

The charging and discharging control device 4 includes a charging circuit 41 for charging the EDLC 3, a discharging circuit 42 for discharging the EDLC 3, a temperature sensor 43 for detecting an ambient temperature of the EDLC 3, and a control circuit 44 for controlling the charging circuit 41 and the discharging circuit 42. The charging circuit 41 includes a charging switch 411 and a charging resistor 412 which are provided in series between a positive electrode of the in-vehicle battery 2 and a positive electrode of the EDLC 3. When the charging switch 411 is turned on, the EDLC 3 is charged with electric power from the in-vehicle battery 2, and when the charging switch 411 is turned off, the electric power from the in-vehicle battery 2 is cut off.

The discharging circuit 42 includes a discharging switch 421 and a discharging resistor 422 which are provided in series between a positive electrode of the EDLC 3 and the ground. When the discharging switch 421 is turned on, electric power from the EDLC 3 is consumed by the discharging resistor 422, and when the discharging switch 421 is turned off, the power from the EDLC 3 to the discharging resistor 422 is cut off.

The temperature sensor 43 is provided around the EDLC 3, detects the ambient temperature of the EDLC 3, and outputs the detected temperature to the control circuit 44 described below. The ambient temperature of the EDLC 3 is considered to be approximately the same as the temperature of the EDLC 3 itself.

The control circuit 44 includes a microcomputer including well-known CPU, ROM, RAM, or the like, and controls the entire charging and discharging control device 4. The control circuit 44 is connected to the above-described charging switch 411 and discharging switch 421, and controls ON/OFF of the switches 411 and 421.

Next, the operation of the power supply system 1 having the configuration as described above will be described. The control circuit 44 determines, for example, whether the ambient temperature detected by the temperature sensor 43 is equal to or lower than a predetermined value, while the EDLC 3 is not used for the above applications. When the ambient temperature is equal to or lower than the predetermined value, the control circuit 44 alternately repeats to turn on the charging switch 411 and the discharging switch 421 to alternately charge and discharge the EDLC 3, and repeats the charging and discharging.

As a result, the EDLC 3 is caused to self-generate heat by an internal resistor of the EDLC 3 at a low temperature that is equal to or lower than a predetermined value, so that the temperature of the EDLC 3 can be raised. Therefore, when the EDLC 3 is used for the above-described application, a decrease in the capacitance due to a decrease in the temperature of the EDLC 3 can be prevented, and it is not necessary to increase the number of EDLCs 3, so that cost down and size down can be achieved.

### (Second Embodiment)

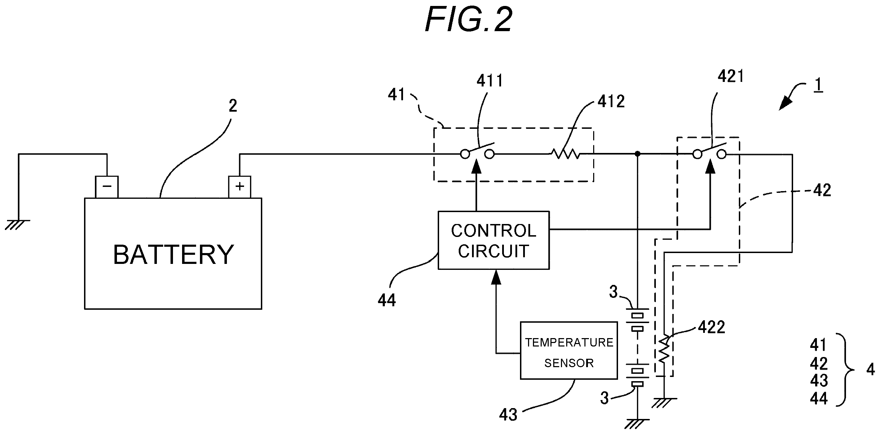

Next, a power supply system 1 according to a second embodiment will be described with reference to Fig. 2. In Fig. 2, the same parts as those in Fig. 1 already described in the first embodiment are denoted by the same reference numerals, and detailed descriptions thereof will be omitted.

The first embodiment and the second embodiment are largely different from each other in an arrangement position of the discharging resistor 422. In the second embodiment, the discharging resistor 422 is disposed in a vicinity of the EDLC 3. As a result, when a discharging current from the EDLC 3 flows through the discharging resistor 422, the discharging resistor 422 generates heat. The EDLC 3 can be heated by the heat generated in the discharging resistor 422, and the decrease of the capacitance of the EDLC 3 at a low temperature can be further prevented.

Here, the features of the embodiments of the charging and discharging control device according to the present invention will be briefly summarized in the following [1] to [3].
[1] A charging and discharging control device (4) of an electric double-layer capacitor (3), the charging and discharging control device (4) comprising:
   a charging circuit (41) receiving power supply from an external power supply (2) and charging the electric double-layer capacitor (3);
   a discharging circuit (42) discharging the electric double-layer capacitor (3); and
   a control circuit (44) controlling the charging circuit (41) and the discharging circuit (42) to alternately repeat the charge and the discharge of the electric double-layer capacitor (3) when temperature of the electric double-layer capacitor (3) is equal to or lower than a predetermined value.
[2] The charging and discharging control device (4) according to [1],
   wherein the discharging circuit (42) includes a discharging resistor (422) connected to the electric double-layer capacitor (3), and
   wherein the discharging resistor (422) is disposed in a vicinity of the electric double-layer capacitor (3).
[3] The charging and discharging control device (4) according to [1],
   wherein the discharging circuit (42) includes a discharging resistor (422) connected to the electric double-layer capacitor (3), and
   wherein the discharging resistor (422) is disposed at a position in which the electric double-layer capacitor (3) is heated by heat generated in the discharging resistor and decrease of capacitance of the electric double-layer capacitor (3) is prevented.

### [Description of Reference Numerals and Signs]

- 2: In-vehicle battery (external power supply)
- 3: EDLC (electric double-layer capacitor)
- 4: Charging and discharging control device
- 41: Charging circuit
- 42: Discharging circuit
- 44: Control circuit
- 422: Discharging resistor

## Claims

1. A charging and discharging control device of an electric double-layer capacitor, the charging and discharging control device comprising:
a charging circuit receiving power supply from an external power supply and charging the electric double-layer capacitor;
a discharging circuit discharging the electric double-layer capacitor; and
a control circuit controlling the charging circuit and the discharging circuit to alternately repeat the charge and the discharge of the electric double-layer capacitor when temperature of the electric double-layer capacitor is equal to or lower than a predetermined value.

2. The charging and discharging control device according to claim 1,
wherein the discharging circuit includes a discharging resistor connected to the electric double-layer capacitor, and
wherein the discharging resistor is disposed in a vicinity of the electric double-layer capacitor.

3. The charging and discharging control device according to claim 1,
wherein the discharging circuit includes a discharging resistor connected to the electric double-layer capacitor, and
wherein the discharging resistor is disposed at a position in which the electric double-layer capacitor is heated by heat generated in the discharging resistor and decrease of capacitance of the electric double-layer capacitor is prevented.
